# EUROPÄISCHE PATENTSCHRIFT

(11) **EP 0 553 331 B1**
(45) Veröffentlichungstag und Bekanntmachung des Hinweises auf die Patenterteilung: **21.05.1997**
(21) Anmeldenummer: 92917944.8
(22) Anmeldetag: 08.08.1992
(51) Int. Cl.: B01J 8/12, B01J 20/34

(54) **VORRICHTUNG ZUM REGENERIEREN VON KOHLENSTOFFHALTIGEN BELADENEN ADSORBENTIEN UND VERWENDUNG DIESER VORRICHTUNG**
DEVICE FOR REGENERATING CONTAMINATED CARBON-CONTAINING ADSORBENTS, AND USE THEREOF
DISPOSITIF DE REGENERATION D'ADSORBANTS CHARGES RENFERMANT DES MATIERES CARBONEES ET UTILISATION DE CE DISPOSITIF

(30) Priorität: 16.08.1991 DE 4127006; 23.10.1991 DE 4134907
(43) Veröffentlichungstag der Anmeldung: 04.08.1993
(73) Patentinhaber: NYMIC ANSTALT, FL-9494 Schaan (LI)
(72) Erfinder: RITTER, Jürgen, D-7000 Stuttgart 75 (DE)
(74) Vertreter: Lins, Edgar, Dipl.-Phys. Dr.jur.
(86) Internationale Anmeldenummer: DE9200670
(87) Internationale Veröffentlichungsnummer: WO9303833

(56) Entgegenhaltungen:
- DE-A- 3 511 766
- Patent Abstracts of Japan, Band 9, Nr 5, C260, Zusammenfassung von JP 59- 160531, publ 1984-09-11

## Beschreibung

Die Erfindung betrifft eine Vorrichtung zum Regenerieren von kohlenstoffhaltigen beladenen Adsorbentien, die in einem Reaktor wenigstens zwei übereinander angeordnete Wanderbetten bilden, die im Gegenstrom von sauerstofffreien Gasen durchströmt werden, wobei das obere Wanderbett und das untere Wanderbett über einen Durchlaß mit gegenüber dem Wanderbett erheblich reduziertem Querschnitt miteinander verbunden sind, unterhalb des Durchlasses ein von Adsorbens freier Raum mit einem Gasauslaß ausgebildet ist und eine Austragvorrichtung am unteren Ende des unteren Wanderbetts die Bewegung des Adsorbens in allen Wanderbetten steuert. Die Erfindung betrifft ferner eine bevorzugte Verwendung dieser Vorrichtung.

Kohlenstoffhaltige Adsorbentien gewinnen insbesondere bei der Reinigung von Rauchgasen und industriellen Prozeßgasen zunehmend an Bedeutung, da diese Verfahren abwasserfrei arbeiten, Deponieprobleme vermeiden helfen und mit ihnen Schadstoffe als Wertstoffe zurückgewonnen und zu verkaufsfähigen Produkten weiterverarbeitet werden können. Dies gilt insbesondere für die Abscheidung und Rückgewinnung von Schwefeldioxid und von Schwermetallen. Der Vorteil bestimmter kohlenstoffhaltiger Adsorbentien besteht darin, daß sie regenerierbar sind, d.h. daß es möglich ist, die adsorbierten Schadstoffe gezielt wieder von dem Adsorbens freizusetzen. Aus dem dabei gewonnenen Reichgas können die in ihm aufkonzentrierten Schadstoffe als Wertstoffe zurückgewonnen und zu verkaufsfähigen Produkten verarbeitet werden, beispielsweise aus SO₂ handelsfähige Schwefelsäure, aus Quecksilberanteilen der Rauchgase metallisches oder in anderer Form verwertbares Quecksilber.

Durch DE 39 08 400 A1 ist eine Vorrichtung zum Regenerieren von kohlenstoffhaltigen beladenen Adsorbentien bekannt, bei der wenigstens zwei Wanderbetten untereinander angeordnet sind. Beide Wanderbetten haben eine eigene Inertgasführung, also eine Gaszuleitung am unteren Ende und eine Gasableitung am oberen Ende des jeweiligen Wanderbettes. Dabei wird das obere Wanderbett von einem heißen Inertgas durchströmt, das als Desorptionsgas wirkt. Es heizt das Adsorbens auf eine Temperatur von beispielsweise zwischen 500° C und 650° C auf, wodurch z.B. an Aktivkoks angelagerte Schwefelsäure und angelagertes Quecksilber desorbiert und als gasförmige Bestandteile im Reichgas abtransportiert werden. Das mittlere Wanderbett hat die Aufgabe, unvollständigen Desorptionsprozessen durch den Temperaturabfall des Desorptionsgases beim Durchströmen des Wanderbettes Rechnung zu tragen. Durch die geringere Temperatur am oberen Ende des Wanderbettes wird angelagerte Schwefelsäure unter Umständen nicht mehr zu SO₂ reduziert, so daß ggfs. schwefelsäurehaltiges Gas mit hohen Korrosionsproblemen entsteht. Das dritte, am unteren Ende des Reaktors angeordnete Wanderbett hat die Aufgabe, das Adsorbens zu kühlen, damit es nach Austritt aus der Regeneration problemfrei handhabbar ist.

Die für große Anlagen konzipierte Vorrichtung gemäß der DE 39 08 400 A1 weist am unteren Ende jedes Wanderbettes eine eigene Austragsvorrichtung auf, so daß zwischen den Wanderbetten jeweils ein adsorbensfreier Raum entsteht und die Fördergeschwindigkeit in den Wanderbetten ggfs. separat steuerbar ist. Für diese Anordnung lassen sich die Gasströme gut von einander trennen, so daß die Ausbildung der übereinander angeordneten Wanderbetten in einem Reaktor mit den separaten Gasführungen ohne weiteres möglich ist.

Bei Müllverbrennungsanlagen ist der Anfall an SO₂ relativ gering (beispielsweise im Vergleich zur Verbrennung von stark schwefelhaltiger Kohle bzw. Braunkohle), so daß für die Adsorption von SO₂ (und Schwermetallen) nur relativ kleine Regenerationsvorrichtungen erforderlich sind.

Durch DE-A-35 11 766 ist eine Vorrichtung der eingangs erwähnten Art zur Regenerierung von Aktivkoks bekannt. Der zugeführte Aktivkoks wird dabei durch ein für Mikrowellen durchlässiges Rohr geleitet, in dem der Aktivkoks auf eine Temperatur im Bereich von 450 bis 700 °C aufgeheizt wird. Darunter bildet der Aktivkoks eine freie Schüttung über einem gelochten Kegelblech. In den Raum unterhalb des gelochten Kegelblechs wird Inertgas geleitet, das durch den heißen Aktivkoks aufgeheizt wird. Nur in der Anlaufphase wird das Inertgas selbst außerhalb des Reaktors mit einer Stützheizung aufgeheizt. Das Inertgas wird mit den desorbierten Schadstoffgasen im Kreislauf umgepumpt. Aus dem Kreislauf wird eine Reichgasmischung in dem Maße abgezogen, wie neues Inertgas zugeführt wird. Unterhalb des Desorptionsgassammelraums befindet sich ein gleich aufgebauter Kühler, in dem Kühlluft zum Abkühlen des Aktivkokses im Kreislauf geführt und außerhalb der Vorrichtung wieder abgekühlt wird. Bei dieser Vorrichtung kann der gesamte Aktivkoksstrom durch ein Verschlußorgan am unteren Ende des unteren Wanderbettes gesteuert werden. Der Aktivkoks muß durch Mikrowellen oder durch elektrische Energiezufuhr aufgeheizt werden, und zwar so hoch, daß auch bei Aufheizung des im Kreislauf geführten Inertgases die benötigte Desorptionstemperatur noch sicher überschritten wird. Die Zuleitung des Inertgases erfolgt in das Zentrum des Wanderbetts.

Der Erfindung liegt daher die Aufgabe zugrunde, eine Regenerationsvorrichtung der eingangs erwähnten Art anzugeben, die mit einem geringen Aufwand herstellbar ist und dennoch zuverlässig funktioniert.

Diese Aufgabe wird erfindungsgemäß mit einer Vorrichtung der eingangs erwähnten Art dadurch gelöst, daß das Adsorbens im oberen Wanderbett ausschließlich durch das ausschließlich im Gegenstrom fließende heiße Inertgas auf eine Desorptionstemperatur aufheizbar ist und daß der Gaseinlaß in das obere Wanderbett mit einem ringförmigen, für eine gleichförmige Verteilung des Gases auf den Querschnitt des Wanderbetts ausgelegten, zum Wanderbett hin offenen Verteilerrohr verbunden ist.

Bei der erfindungsgemäßen Vorrichtung erfolgt die Aufheizung des Adsorbens nur über das im Gegenstrom geführte heiße Inertgas.

Vorzugsweise ist auch für das untere Wanderbett eine Gasführung vorgesehen, die der Gasführung im oberen Wanderbett entspricht.

Das Verteilerrohr kann prinzipiell im Wanderbett angeordnet sein. In einer bevorzugten Ausführungsform der Erfindung ist das Verteilerrohr jedoch an der Außenseite des Reaktors angeordnet und steht über wenigstens eine gasdurchlässige Öffnung mit dem zugehörigen Wanderbett in Verbindung. Die Anbringung des Verteilerrohrs an der Außenseite hat den Vorteil, daß Eingriffe im Innern des Reaktors nicht erforderlich sind und das Verteilerrohr außen an dem Behälter des Reaktors als gesondertes Teil, befestigt, beispielsweise angeschweißt werden kann. Das Eindringen von Adsorbens in das Verteilerrohr kann in einfacher Weise durch ein schräg in das Innere des Reaktors weisendes Abschirmblech verhindert werden. Es ist aber auch möglich, die Öffnung zwischen dem Verteilerrohr und dem zugehörigen Wanderbett lediglich gasdurchlässig, nicht aber durch für das Adsorbens durchlässig auszuführen. In diesem Fall erübrigt sich das Vorsehen des Abschirmbleches.

Wenn der Vorratsbehälter so oberhalb des oberen Wanderbettes angeordnet ist, daß eine Wärmeübertragung vom oberen Wanderbett zum Vorratsbehälter möglich ist, ist es zweckmäßig, eine Wärmeabschirmung oberhalb des oberen Wanderbettes vorzusehen, um ein vorzeitiges Aufheizen des Adsorbens in dem Vorratsbehälter und somit die frühzeitige Desorption von SO₂ ohne eine kontrollierte Abführung der freigesetzten Gase zu verhindern. Wenn der Vorratsbehälter außerhalb des Reaktors angeordnet ist, kann die Wärmeabschirmung entfallen.

Die erfindungsgemäße Vorrichtung wird vorzugsweise so benutzt, daß in dem oberen Wanderbett die Desorption und in dem unteren Wanderbett die Kühlung stattfindet. Jedenfalls für kleinere Regeneratoren hat sich gezeigt, daß die Gefahr von schwefelsäurehaltigen Reichgasen vernachlässigbar ist, so daß eine Sicherheitsstufe, an deren Ende etwaige Schwefelsäuregase zur Sicherheit nochmals stark aufgeheizt und dadurch zu SO₂ reduziert werden, in diesen Fällen entbehrlich ist.

Bei dieser Anwendung der erfindungsgemäßen Vorrichtung ist es vorteilhaft, wenn mit dem kühlen Inertgas im unteren Wanderbett ein geringfügig höherer Druck ausgebildet wird als mit dem heißen Inertgas im oberen Wanderbett. Sollte es zu einem geringen Gasübertritt von einem Wanderbett zum anderen kommen, ist durch diese Verwendungsart sichergestellt, daß allenfalls geringe Mengen Inertgas aus dem unteren Wanderbett in das obere Wanderbett gelangen, wo es keine merkliche Beeinträchtigung der Desorption hervorruft. Ein die Kühlung störender Übertritt von heißem Intertgas in die Kühlstufe wird somit sicher verhindert.

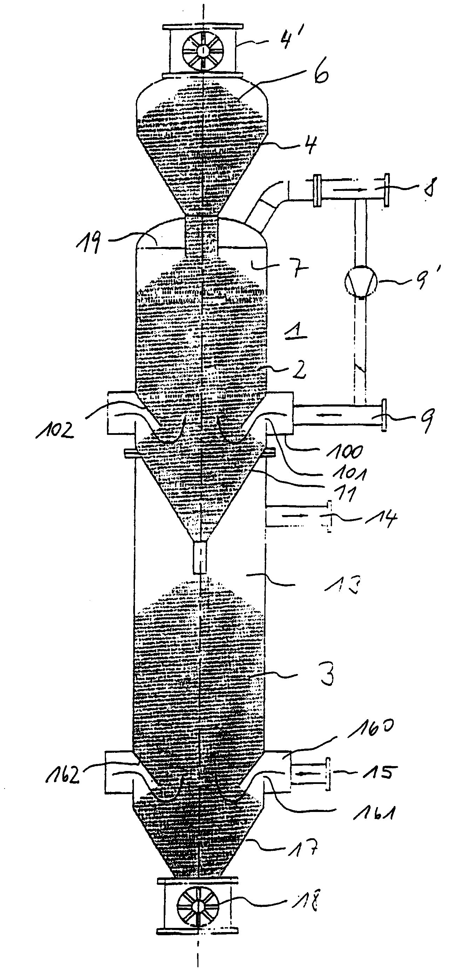

Die Erfindung soll im folgenden anhand eines in der Zeichnung dargestellten Ausführungsbeispiels näher erläutert werden.

Die Zeichnung zeigt einen Reaktor 1 mit einem kreisförmigen Querschnitt, in dem zwei Wanderbetten 2, 3 übereinander ausgebildet sind.

An der Oberseite des Reaktors befindet sich ein mit einem Vorratsbehälter in Verbindung stehender, über eine Zellenradschleuse 4' beschickter Aufgabetrichter 4, der mit dem beladenen Adsorbens gefüllt wird. Die unteren Enden des Aufgabetrichters 4 enden an der Oberseite des oberen Wanderbetts 2, so daß das Adsorbens 6 aus dem Aufgabetrichter 4 mit dem Adsorbens in dem oberen Wanderbett 2 in Verbindung steht. Unter dem Aufgabetrichter 4 ist ein von Adsorbens freier Raum 7 ausgebildet, der mit einem Gasauslaß 8 in Verbindung steht.

Am unteren Ende des Wanderbettes 2 befindet sich ein Gaseinlaß 9, der in ein ringförmiges, an der Außenseite des Reaktors 1 angebrachtes Verteilerrohr 100 einmündet. Das ringförmige Verteilerrohr 100 ist über wenigstens eine Öffnung 101 mit dem Wanderbett verbunden, wobei ein schräg nach unten in das Innere des Reaktors 1 weisendes Abschirmblech 102 das Eintreten von Adsorbens 6 in das Verteilerrohr 100 verhindert. Durch das ringförmige Verteilerrohr 100 wird Gas gleichmäßig auf den Querschnitt des Wanderbettes 2 verteilt.

Unterhalb des ringförmigen Verteilerrohrs 100 befindet sich ein konisch nach oben erweiterter Trichter 11, in dessen Bereich sich in analoger Weise zu dem oberen Wanderbett 2 ein von Adsorbens freier Raum 13 bildet, der mit einem Gasauslaß 14 in Verbindung steht. An der Unterseite des unteren Wanderbettes 3 befindet sich ein Gaseinlaß 15 mit einem ringförmigen Verteilerrohr 160, über das Gas in analoger Weise wie beim ringförmigen Verteilerrohr 100 des oberen Wanderbetts 2 über den Querschnitt des unteren Wanderbetts 3 verteilt wird. Am unteren Ende des unteren Wanderbetts 3 befindet sich ein Auslaßtrichter 17, über den regeneriertes und gekühltes Adsorbens mit Hilfe einer als Zellenradschleuse ausgebildeten Austragsvorrichtung 18 ausgetragen werden kann.

Da die beiden Wanderbetten 2, 3 und das Adsorbens 6 in dem Aufgabetrichter 4 miteinander in Verbindung stehen, führt eine Entnahme von regeneriertem Adsorbens über die Austragsvorrichtung 18 zu einem Nachwandern von Adsorbens in den beiden Wanderbetten 2, 3 und im Aufgabetrichter 4.

In den Gaseinlaßstutzen 9 wird in einer bevorzugten Verwendungsweise heißes Inertgas zur Desorption der Schadstoffe vom Adsorbens eingeleitet, das nach Durchströmen des Wanderbettes 2 im Gegenstrom am Gasauslaß 8 am oberen Ende des oberen Wanderbettes 2 als Reichgas wieder entnehmbar ist.

In den Gaseinlaß 15 des unteren Wanderbettes wird kühles Inertgas eingeleitet, das im durch das Adsorbens im unteren Wanderbett 3 aufgeheizten Zustand am Gasauslaß 14 entnommen, über einen (nicht dargestellten) Wärmetauscher geleitet und im Kreislauf wieder dem Gaseinlaß 15 zugeführt wird.

Das am Gasauslaß 8 entnehmbare Reichgas ist im bevorzugten Anwendungsfall mit SO₂ und ggfs. Quecksilber beladen. Nach bekannten Verfahren kann hieraus H₂SO₄ in reiner und aufkonzentrierter, handelsüblicher Form als Wertstoff gewonnen werden. Ferner ist es möglich, auch das Quecksilber in metallischer Form oder in einer verwertbaren Verbindung wiederzugewinnen.

Oberhalb des oberen Wanderbettes 2 und des sich dort befindenden von Adsorbens freien Raum 7 ist ein Trennblech 19 angeordnet, das eine Wärmeabschirmung vom Wanderbett 2 zum Adsorbens 6 in dem Aufgabetrichter 4 bewirkt. Dadurch wird eine vorzeitige Aufheizung des Adsorbens 6 in dem Aufgabetrichter 4, und damit eine vorzeitige Desorption, verhindert.

Die Figur läßt noch erkennen, daß der Gasauslaß 8 und der Gaseinlaß 9 des oberen Wanderbettes 2 über ein Ventil 9' miteinander verbunden sind. Diese Bypass-Leitung erlaubt die kontrollierte Zumischung einer Teilmenge des ca. 325° C heißen Reichgases zu dem Gas am Gaseinlaß 9. Dadurch ist es möglich, unmittelbar bei der Verbrennung an einem Brenner mit etwa 850° C entstehendes Gas zu verwenden, das durch die Zumischung einer Teilmenge des kühleren Reichgases auf die gewünschte Inertgas-Temperatur von ca. 650° C beim Eintritt in das obere Wanderbett 2 gebracht wird. Dadurch kann eine etwaige Kühlung des vom Brenner kommenden Gases entfallen.

## Patentansprüche

1. Vorrichtung zum Regenerieren von kohlenstoffhaltigen beladenen Adsorbentien (6), die in einem Reaktor (1) wenigstens zwei übereinander angeordnete Wanderbetten (2, 3) bilden, die im Gegenstrom von sauerstofffreien Gasen durchströmt werden, wobei das obere Wanderbett (2) und das untere Wanderbett (3) über einen Durchlaß (11) mit gegenüber dem Wanderbett (2, 3) erheblich reduziertem Querschnitt miteinander verbunden sind, unterhalb des Durchlasses (11) ein von Adsorbens freier Raum (13) mit einem Gasauslaß ausgebildet ist und eine Austragvorrichtung (18) am unteren Ende des unteren Wanderbetts (3) die Bewegung des Adsorbens (6) in allen Wanderbetten (2, 3) steuert, **dadurch gekennzeichnet, daß** das Adsorbens (6) im oberen Wanderbett (2) ausschließlich durch das ausschließlich im Gegenstrom fließende heiße Inertgas auf eine Desorptionstemperatur aufheizbar ist und daß der Gaseinlaß (9) in das obere Wanderbett mit einem ringförmigen, für eine gleichförmige Verteilung des Gases auf den Querschnitt des Wanderbetts (2) ausgelegten, zum Wanderbett (2) hin offenen Verteilerrohr (100) verbunden ist.

2. Vorrichtung nach Anspruch 1, dadurch gekennzeichnet, daß am oberen Ende des oberen Wanderbetts (2) ebenfalls ein von Adsorbens freier Raum (7) mit einem Gasauslaß (8) ausgebildet ist.

3. Vorrichtung nach Anspruch 1 oder 2, dadurch gekennzeichnet, daß die Gaszuführung für das untere Wanderbett (3) ebenfalls durch ein zum Wanderbett (3) hin offenes Verteilerrohr (160) erfolgt.

4. Vorrichtung nach Anspruch 3, dadurch gekennzeichnet, daß der Durchlaß (11) eine zentrale rohrförmige Anordnung (11) ist, die sich konisch nach oben erweitert.

5. Vorrichtung nach einem der Ansprüche 1 bis 4, gekennzeichnet durch eine Wärmeabschirmung (19) oberhalb des oberen Wanderbettes (2).

6. Vorrichtung nach einem der Ansprüche 1 bis 5 dadurch gekennzeichnet, daß das Verteilerrohr (100,160) an der Außenseite des Reaktors (1) angeordnet und über wenigstens eine gasdurchlässige Öffnung (101,161) mit dem Wanderbett (2,3) verbunden ist.

7. Vorrichtung nach Anspruch 6, dadurch gekennzeichnet, daß ein Abschirmblech (102,162) ein Eindringen von Adsorbens in das Verteilerrohr (100,160) verhindert.

8. Vorrichtung nach einem der Ansprüche 1 bis 7, dadurch gekennzeichnet, daß das Verteilerrohr (100,160) den Reaktor (1) ringförmig umgibt.

9. Verfahren zum Betreiben einer Vorrichtung nach einem der Ansprüche 1 bis 8, **dadurch gekennzeichnet, daß** durch das obere Wanderbett (2) heißes Inertgas zum Zwecke der Desorption und durch das untere Wanderbett (3) kühles Inertgas zum Zwecke der Kühlung geleitet wird.

10. Verfahren nach Anspruch 9, **dadurch gekennzeichnet, daß** mit dem kühlen Inertgas ein geringfügig höherer Druck im unteren Wanderbett (3) als mit dem heißen Inertgas im oberen Wanderbett (2) ausgebildet wird.

## Claims

1. Device for regenerating contaminated adsorbents containing carbon (6), which in a reactor (1) form at least two migrating beds (2, 3) arranged one above the other, through which beds oxygen-free gases flow in countercurrent, wherein the top migrating bed (2) and the bottom migrating bed (3) are connected together via an opening (11) with a cross-section that is considerably reduced compared with the migrating bed (2, 3), an adsorbent-free chamber (13) with a gas outlet is formed under the opening (11) and a discharge device (18) at the bottom end of the bottom migrating bed (3) controls the movement of the adsorbent (6) in all migrating beds (2, 3), characterized in that the adsorbent (6) in the top migrating bed (2) is heatable to a desorption temperature exclusively by the hot inert gas flowing exclusively in countercurrent and that the gas inlet (9) into the top migrating bed is connected to an annular distribution pipe (100) which is open towards the migrating bed (2) and is designed for a uniform distribution of the gas over the cross-section of the migrating bed (2).

2. Device according to Claim 1, characterized in that an adsorbent-free chamber (7) with a gas outlet (8) is also formed at the top end of the top migrating bed (2).

3. Device according to Claim 1 or 2, characterized in that the gas supply for the bottom migrating bed (3) also takes place through a distribution pipe (160) open towards the migrating bed (3).

4. Device according to Claim 3, characterized in that the opening (11) is a central, tubular arrangement (11) which widens conically upwards.

5. Device according to one of Claims 1 to 4, characterized by a heat shield (19) above the top migrating bed (2).

6. Device according to one of Claims 1 to 5, characterized in that the distribution pipe (100, 160) is arranged on the outside of the reactor (1) and is connected to the migrating bed (2, 3) via at least one gas-permeable opening (101, 161).

7. Device according to Claim 6, characterized in that a shield plate (102, 162) prevents a penetration of adsorbent into the distribution pipe (100, 160).

8. Device according to one of Claims 1 to 7, characterized in that the distribution pipe (100, 160) surrounds the reactor (1) in an annular manner.

9. Process for operating a device according to one of Claims 1 to 8, characterized in that hot inert gas is conveyed through the top migrating bed (2) for the purpose of desorption and cool inert gas is conveyed through the bottom migrating bed (3) for the purpose of cooling.

10. Process according to Claim 9, characterized in that a slightly higher pressure in the bottom migrating bed (3) is formed with the cool inert gas than in the top migrating bed (2) with the hot inert gas.

## Revendications

1. Dispositif de régénération d'adsorbants (6) chargés contenant des matières carbonées, adsorbants qui forment dans un réacteur (1) au moins deux lits fluidisés (2, 3) disposés l'un au-dessus de l'autre, à travers lesquels des gaz dépourvus d'oxygène s'écoulent à contre-courant, le lit fluidisé supérieur (2) et le lit fluidisé inférieur (3) étant reliés l'un à l'autre par un passage (11) ayant une section considérablement réduite par rapport au lit fluidisé (2, 3), un espace libre d'adsorbant (13) étant aménagé sous le passage (11) et muni d'une sortie de gaz, un dispositif extracteur (18) pilotant à l'extrémité inférieure du lit fluidisé inférieur (3) le mouvement de l'adsorbant dans tous les lits fluidisés (2, 3), caractérisé en ce que dans le lit fluidisé supérieur (2) l'adsorbant (6) peut être chauffé à une température de désorption exclusivement par le gaz inerte chaud s'écoulant exclusivement à contre-courant, et en ce que l'entrée de gaz (9) dans le lit fluidisé supérieur est reliée avec un tuyau répartiteur (100) annulaire, ouvert vers le lit fluidisé (2), aménagé pour une répartition uniforme du gaz sur la section du lit fluidisé (2).

2. Dispositif selon la revendication 1, caractérisé en ce qu'à l'extrémité supérieure du lit fluidisé supérieur (2) est également aménagé un espace (7) libre d'adsorbant, muni d'une sortie de gaz.

3. Dispositif selon la revendication 1 ou 2, caractérisé en ce que l'adduction de gaz pour le lit fluidisé inférieur (3) a également lieu à travers un tuyau répartiteur (160) ouvert vers le lit fluidisé (3).

4. Dispositif selon la revendication 3, caractérisé en ce que le passage (11) est un agencement tubulaire central (11), qui s'élargit en cône vers le haut.

5. Dispositif selon l'une des revendications 1 à 4, caractérisé par une protection contre la chaleur (19) au-dessus du lit fluidisé supérieur (2).

6. Dispositif selon l'une des revendications 1 à 5, caractérisé en ce que le tube répartiteur (100, 160) est disposé sur le côté extérieur du réacteur (1) et relié avec le lit fluidisé (2, 3) par au moins une ouverture (101, 161) perméable aux gaz.

7. Dispositif selon la revendication 6, caractérisé en ce qu'une tôle protectrice (102, 162) empêche la pénétration d'adsorbant dans le tube répartiteur (100, 160).

8. Dispositif selon l'une des revendications 1 à 7, caractérisé en ce que le tube répartiteur (100, 160) entoure annulairement le réacteur (1).

9. Procédé pour faire fonctionner un dispositif selon l'une des revendications 1 à 8, caractérisé en ce qu'on conduit du gaz inerte chaud à travers le lit fluidisé supérieur (2) dans le but de la désorption et du gaz inerte froid à travers le lit fluidisé inférieur (3) dans le but du refroidissement.

10. Procédé selon la revendication 9, caractérisé en ce qu'on établit une pression légèrement plus forte dans le lit fluidisé inférieur (3) avec le gaz inerte froid que dans le lit fluidisé supérieur (2) avec le gaz inerte chaud.
